Europäisches Patentamt

(19) European Patent Office    (11) Publication number:    **0 043 806**

Office européen des brevets    **B1**

(12)    **EUROPEAN PATENT SPECIFICATION**

(45) Date of publication of patent specification: **12.09.84**    (51) Int. Cl.³: **B 60 K 17/34**

(21) Application number: **81830110.3**

(22) Date of filing: **06.07.81**

(54) Motor vehicle having a transmission system.

(30) Priority: **09.07.80 IT 6808780**

(43) Date of publication of application:
**13.01.82 Bulletin 82/02**

(45) Publication of the grant of the patent:
**12.09.84 Bulletin 84/37**

(84) Designated Contracting States:
**DE FR GB IT SE**

(56) References cited:
**FR-A-1 572 402**
**FR-E- 94 265**
**GB-A-2 035 930**
**US-A-1 686 431**
**US-A-1 719 861**
**US-A-1 965 266**
**US-A-2 796 943**
**US-A-4 188 838**

(73) Proprietor: **FIAT AUTO S.p.A.**
**Corso Giovanni Agnelli 200**
**I-10135 Torino (IT)**

(72) Inventor: **Mantovani, Aldo**
**Strada Val Pattonera 163/26**
**I-10133 Torino (IT)**

(74) Representative: **Jacobacci, Filippo et al**
**c/o JACOBACCI-CASETTA & PERANI S.n.c. Via**
**Alfieri, 17**
**I-10121 Torino (IT)**

Courier Press, Leamington Spa, England.

## Description

The present invention relates to a motor vehicle with a front-mounted engine and gearbox disposed transverse the longitudinal axis of the vehicle, having a transmission system including a front differential, the spider of which is driven by a gear carried by the secondary shaft of the gearbox, for transmitting driving torque to the front wheels of the motor vehicle. Such vehicles are commonplace, and usually take the form of passenger cars.

The object of the present invention is to provide a transmission system of the type specified above, which allows driving torque to be transmitted to all the four wheels of the motor vehicle and which is simple to construct and of small bulk.

In order to achieve this object, the invention provides a transmission system of the type specified above, characterised in that it further includes:

a rear differential for transmitting driving torque to the rear wheels of the motor vehicle,

an intermediate differential constituted by an epicyclic gear train which has a principal axis coaxial with and is enclosed in the casing containing the front differential, and which connects the spider of the latter to the said gear carried by the secondary shaft of the gearbox.

a bevel gear fixed to the planet carrier of the intermediate differential, and

a bevel pinion meshed with the said bevel gear and connected kinematically to the rear differential.

As a result of these characteristics, the driving torque is distributed correctly by means of the said intermediate differential between the two axles of the motor vehicle. At the same time, the intermediate differential structure is formed within the casing for the front differential such that the bulk of the latter is not altered to any considerable extent.

In addition, the toothed gear used for transmission to the rear differential is disposed within the casing for the front differential.

According to a further preferred characteristic, the transmission system is further provided with means for locking the intermediate differential, adapted to render the spider of the front differential rigid with the planet carrier of the intermediate differential.

Further characteristics and advantages of the invention will emerge from the description which follows with reference to the appended drawings, provided purely by way of non-limiting example, in which:

Figure 1 is a perspective view of a transmission system of a motor vehicle according to the present invention.

Figure 2 is a partially-sectioned view of a detail of the transmission system of Figure 1.

Figure 3 illustrates a detail of Figure 2 in a different condition of operation,

Figure 4 is a further sectional view of the detail of Figure 2, and

Figure 15 is a section taken on line V—V of Figure 2.

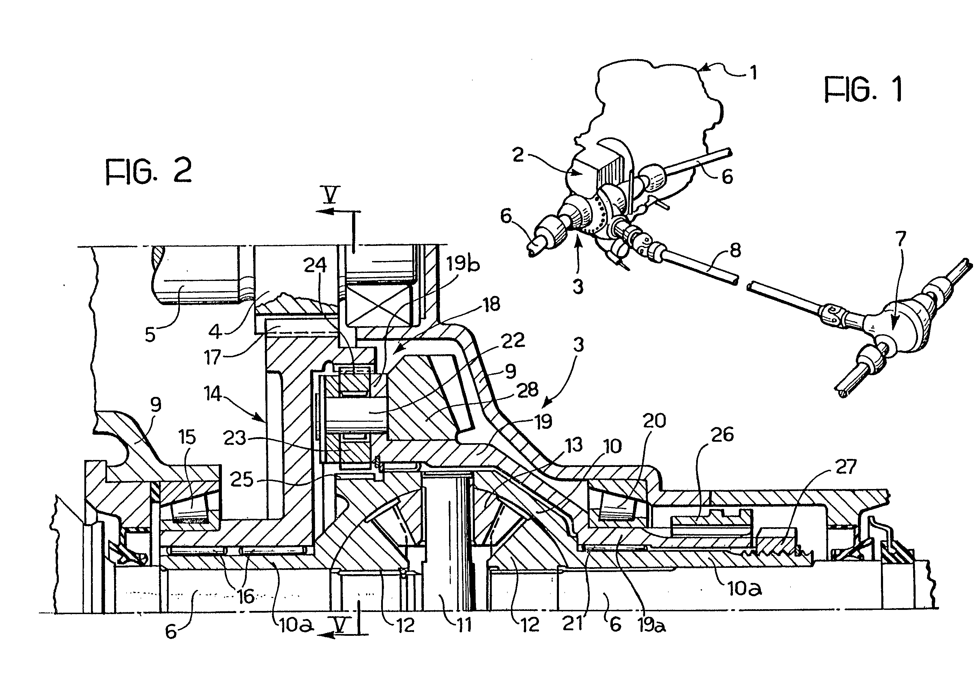

In Figure 1, there is shown schematically an internal combustion engine 1 intended to be mounted in the front part of a motor vehicle with its axis transverse the longitudinal axis of the vehicle.

The engine 1 includes a gearbox 2 of the type with gears in permanent mesh with each other and having a primary shaft and a secondary shaft also extending transverse the longitudinal axis of the motor vehicle.

By 3 is indicated a front differential which is driven by a gear 4 (see Figure 2) carried by the secondary shaft 5 of the gearbox 2 through an intermediate differential 18, and which transmits driving torque to the front wheels of the motor vehicle through two half-shafts 6.

The transmission system illustrated in Figure 1 further includes a rear differential 7 for transmitting driving torque to the rear wheels of the motor vehicle, which is connected through a transmission shaft 8 to the gear train of the intermediate differential 18 as described in detail below.

The front differential 3 and the intermediate differential 18 are housed in a casing 9 joined to the casing of the gearbox 2.

The differential 3 is of the known type having a spider 10 which has two stub axles 10a opposite each other and within which are rotatably mounted the half-shafts 6 for transmitting driving torque to the front wheels of the motor vehicle. On the ends of the two half-shafts 6 which face each other are mounted two side gears 12 which mesh with two side pinions 13 (only one of which is seen in Figure 2) which are in turn rotatably supported about a pin 11 fixed to the spider 10.

According to the present embodiment of the invention, a toothed wheel 14 is rotatably mounted by means of a roller bearing 15 within the casing 9 containing the front differential 3 and by means of needle rollers 16 about one of the two stub axles 10a of the spider 10 of the front differential 3.

In the transmission system according to the present embodiment of the invention, the gear box 4 carried by the secondary shaft 5 of the gearbox meshes with an outer crown wheel 17 of the toothed wheel 14 instead of directly with a crown wheel fixed to the spider 10 of the differential as in the known systems.

Moreover, according to the present invention, the epicyclic gear train 18 designed to act as an intermediate differential to distribute the driving torque correctly between the front differential 3 and the rear differential 7 of the transmission system is located within the casing 9 containing the front differential 3.

The intermediate differential 18 includes a planet carrier 19 having a hub 19a which is mounted for free rotation by means of a roller bearing 20 within the casing 9 containing the front differential 3 and by means of a needle rollers 21 about the stub axle 10a of the spider 10 which is opposite to the toothed wheel 14.

The planet carrier 19 surrounds the spider 10 and has a flange 19b adjacent to the toothed wheel 14 to which are fixed two pins 22 with their axes parallel to the axis of rotation of the spider 10 and the planet carrier 19.

Planets 23 and 23a are mounted for free rotation about the pins 22.

A first series of the planets 23 (see Figure 5) meshes with an internal crown wheel 24 of the toothed wheel 14, while a second series of the planets 23a meshes with an outer crown wheel 25 of the spider 10, each planet 23a meshing with a corresponding planet 23.

Thus, rotation transmitted by the secondary shaft 5 of the gearbox to the toothed wheel 14 by means of the coupling between the gear 4 and the outer crown wheel 17 induces a corresponding rotation of the planet carrier 19 by means of the coupling between the internal crown wheel 24 and the first series of planets 23. The rotation of the planet carrier 19 is thus transmitted to the spider 10 of the front differential 3 by means of the coupling of the second series of planet gears 23a and the outer crown wheel 25.

Hence, in the transmission system according to the present invention, the spider 10 of the front differential 3, instead of being connected directly to the gear 4 carried by the secondary shaft 5 of the gearbox is connected to this gear 4 by means of the interposition of the epicyclic gear train 18 which acts as an intermediate differential of the transmission system.

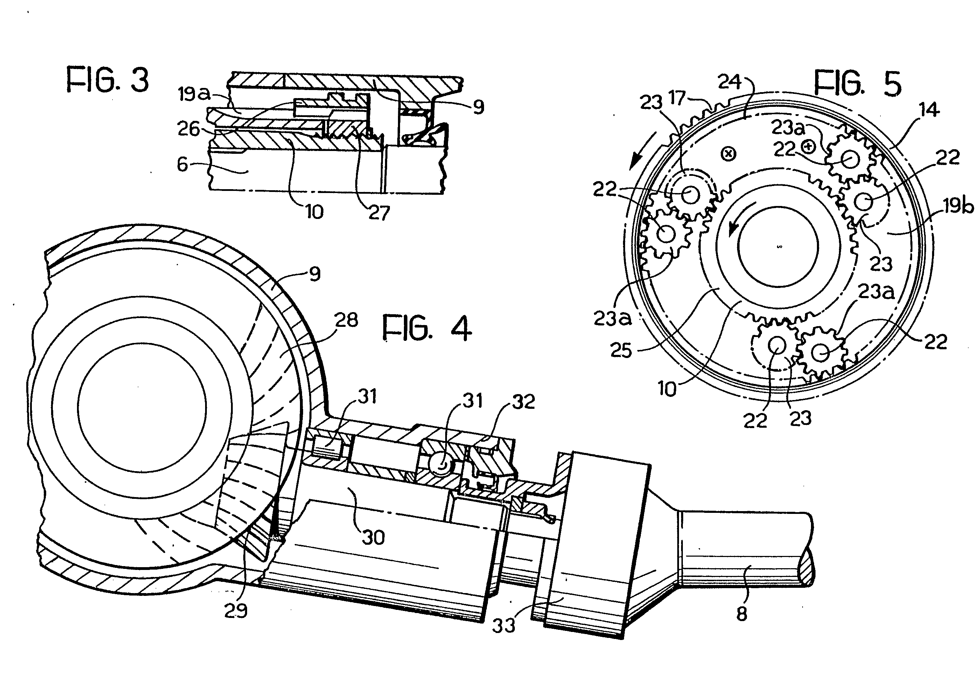

A sleeve 26 is mounted by means of a grooved coupling on a hub 19a of the planet carrier 19 of the intermediate differential. The sleeve 26 is axially displaceable by means of known type (not shown) between a disengaged position (illustrated in Figure 2) in which the planet carrier 19 is free to rotate with respect to the spider 10, and an engaged position (illustrated in Figure 3) in which the internal grooved surface of the sleeve 26 is also coupled with the outer teeth of a gear wheel 27 fixed to one of the stub axles 10a of the spider 10 of the front differential 3. In the condition illustrated in Figure 3, the sleeve 26 renders the planet carrier 19 rigid with the spider 10, thus achieving locking of the intermediate differential.

To the planet carrier 19 of the intermediate differential is fixed a bevel gear 28 which meshes with a bevel pinion 29 (see Figure 4) for transmitting drive to the rear differential 7.

The bevel pinion 29 is disposed at one end of a shaft 30 rotatably mounted by means of rolling bearings 31 within a cylindrical extension 32 forming part of the casing 9 containing the front differential 3.

The end of the shaft 30 opposite the bevel pinion 29 is connected by means of a constant velocity joint 33 to the transmission shaft 8 for transmitting driving torque to the spider of the rear differential 7.

The transmission system according to the present invention allows all-round traction to be provided in a motor vehicle having a front-mounted engine and gearbox disposed transverse the longitudinal axis of the motor vehicle.

Moreover, the system according to the present invention includes and intermediate differential for distributing the driving torque correctly between the front differential and the rear differential, constituted by an epicyclic gear train enclosed within the casing 9 containing the front differential so as not to impair the simplicity and low bulk of the system.

The pair of bevel gears 28, 29 for transmitting drive to the rear differential is also housed within the casing for the front differential, again in order to produce a system of low bulk. The said bevel gears are, moreover, preferably of the hypoid type so as to ensure the quietness of the system.

Naturally, the details of construction and embodiments may be varied widely with respect to that described and illustrated, purely by way of example, without thereby departing from the scope of the present invention.

## Claims

1. A motor vehicle with a front-mounted engine (1) and gearbox (2) disposed transverse the longitudinal axis of the motor vehicle, having a transmission system including a front differential (3) the spider (10) of which is driven by a gear (4) carried by the secondary shaft (5) of the gearbox (2) for transmitting driving torque to the front wheels of the motor vehicle, characterised in that the said transmission system further includes:

a rear differential (7) for transmitting driving torque to the rear wheels of the motor vehicle,

an intermediate differential (18) constituted by a epicyclic gear train which has a principal axis coaxial with and is enclosed in the casing (9) containing the front differential (3), and which connects the spider (10) of the latter to the said gear (4) carried by the secondary shaft (5) of the gearbox (2).

a bevel gear (28) fixed to the planet carrier (19) of the intermediate differential (18), and

a bevel pinion (29) meshed with the said bevel gear (28) and connected kinematically to the rear differential (7).

2. A vehicle according to Claim 1, characterised in that it is further provided with means (26) for locking the intermediate differential (18), adapted to render the spider (10) of the front differential (3) rigid with the planet carrier (19) of the intermediate differential (18).

3. A vehicle according to Claim 1 characterised in that the epicyclic gear train (18) constituting the intermediate differential comprises:

a toothed wheel (14) mounted for free rotation within the casing (9) containing the front differential (3) and about the spider (10) of the latter, the said toothed wheel (14) having an outer crown wheel (17) meshing with the gear (4) carried by the secondary shaft (5) of the gearbox (2) and an internal crown wheel (24),

a planet-carrier (19) mounted for free rotation on the spider (10) of the front differential (3),

a first series (23) and a second series (23a) of planets supported for free rotation about pins (22) fixed to the planet carrier (19) and meshing with each other and, respectively, with the said internal crown wheel (24) and with an outer crown wheel (25) formed on the outer surface of the spider (10) of the front differential (3).

4. A vehicle according to Claims 2 and 3, characterised in that the said locking means include a sleeve (26) fixed for rotation with the planet carrier (19) of the intermediate differential (18) and slidable with respect thereto between a first, extreme, disengaged position and a second, extreme, engaged position on the spider (10) of the front differential.

## Revendications

1. Véhicule automobile à (1) monté à l'avant et à boîte de vitesse (2) disposée transversalement à l'axe longitudinal du véhicule automobile, ayant une transmission comportant un différentiel avant (3) dont le croisillon (10) est entraîné par un pignon (4) porté par l'arbre secondaire (5) de la boîte de vitesse (2) pour transmettre le couple moteur aux roues avant du véhicule automobile, caractérisé en ce que ladite transmission comporte encore:
— un différentiel arrière (7) pour la transmission du couple moteur aux roues arrière du véhicule automobile,
— un différentiel intermédiaire (18) constitué par un train d'engrenage épicycloïdal qui a un axe principal coaxial au carter (9) contenant le différentiel avant et est enferé dans ce carter, et qui relie le croisillon (10) de ce dernier audit pignon (4) porté par l'arbre secondaire (5) de la boîte de vitesse (2),
— un pignon d'angle (28) fixé au porté-satellites (19) du différentiel intermédiaire (18), et
— un pignon d'angle (29) en prise avec ledit pignon d'angle (28) et en liaison cinématique avec le différentiel arrière (7).

2. Véhicule selon la revendication 1, caractérisé en ce qu'il est en outre pourvu de moyens (26) de verrouillage du différentiel intermédiaire (18), propres à rendre le croisillon (10) du différentiel avant (3) solidaire du porte-satellites (19) du différentiel intermédiaire (18).

3. Véhicule selon la revendication 1, caractérisé en ce que le train d'engrenage épicycloïdal (18) constituant le différentiel intermédiaire comprend:
— une roue dentée (14) monté folle dans le carter (9) contenant le différentiel avant (3) et autour du croisillon (10) de ce dernier, ladite roue dentée (14) ayant une couronne dentée externe (17) qui engrène avec le pignon (4) porté par l'arbre secondaire (5) de la boîte de vitesse (2) et une couronne dentée interne (24),
— un porte-satellites (19) monté fou sur le croisillon (10) du différentiel avant (3),
— une première série (23) et une seconde série (32a) de satellites tourillonnant autour d'axes (22) fixés au porte-satellites (19) et engrenant les uns avec les autres ainsi que, respectivement, avec ladite couronne dentée interne (24) et avec une couronne dentée externe (25) formée sur la surface extérieure du croisillon (10) du différentiel avant (3).

4. Véhicule selon les revendications 2 et 3, caractérisé en ce que lesdits moyens de verrouillage comportent un manchon (26) solidaire en rotation du porte-satellites (19) du différentiel intermédiaire (18) et pouvant coulisser par rapport à lui entre une première position extrême de non engagement et une seconde position extrême d'engagement sur le croisillon (10) du différentiel avant.

## Patentansprüche

1. Kraftfahrzeug mit einem Frontmotor (1), einem quer zur Längsachse des Kraftfahrzeuges angeordneten Wechselgetriebe (2) und einem Übertragungssystem einschließlich eines Frontdifferentials (3), dessen Lagerkreuz (10) von einem von der Sekundärwelle (5) des Wechselgetriebes (2) getragenen Zahnrad (4) zur Übertragung des Antriebsdrehmomentes auf die Vorderräder des Kraftfahrzeuges angetrieben ist, dadurch gekennzeichnet, daß das genannte Übertragungssystem ferner aufweist.
ein Heckdifferential (7) zur Übertragung des Antriebsdrehmomentes auf die Hinterräder des Kraftfahrzeugs,
ein Zwischen-Differentialgetriebe (18), das von einem Planetengetriebewerk gebildet ist, welches in dem das Frontdifferential (3) umfassenden Gehäuse (9) eingeschlossen ist, eine mit dem Gehäuse koaxiale Hauptachse aufweist und das Lagerkreiz (10) des Frontdifferentials mit dem von der Sekundärwelle (5) des Wechselgetriebes (2) getragenen genannten Zahnrad (4) verbindet,
ein Kegelrad (28), das an dem Plantenträger (19) des Zwischen-Differentialgebriebes (18) befestigt ist,
ein Kegelradritzel (29), das mit dem genannten Kegelrad (28) im Eingriff steht und Kinematisch mit dem Heckdifferential (7) verbunden ist.

2. Fahrzeug nach Anspruch 1, dadurch gekennzeichnet, daß es weiterhin mit Mitteln (26) zum Sperren des Zwischen-Differentialgetriebes (18) versehen ist, welche angepaßt sind, das Lagerkreuz (10) des Frontdifferentials (3) starr mit dem Planententräger (19) des Zwischen-Differentialgetriebes (18) zu verbinden.

3. Fahrzeug nach Anspruch 1, dadurch gekennzeichnet, daß das Planetgetriebewerk (18),

welches das Zwischen-Differentialgetriebe bildet, umfaßt,

ein Zahnrad (14), das angebracht ist zur freien Rotation innerhalb des das Frontdifferential (3) umfassenden Gehäuses (9) und um das Lagerkreuz (10) des Frontdifferentials, welches genannte Zahnrad (14) ein mit dem von der Sekundärwelle (5) des Wechselgetriebes (2) getragenen Zahnrad (4) im Eingriff stehendes äußeres Planrad (17) und ein inneres Planrad (24) aufweist,

einen Planetenträger (19), der zur freien Rotation auf dem Lagerkreuz (10) des Frontdifferentials (3) angebracht ist,

eine erste Reihe (23) und eine zweite Reihe (23a) von Planetenrädern, die zur freien Rotation um am Planetenträger (19) befestigte Bolzen (22) gelagert sind und miteinander und mit dem genannten inneren Planrad (24) bzw. mit einem an der Außenfläche des Lagerkreuzes (10) des Frontdifferentials (3) gebildeten äußeren Planrad (25) in Eingriff stehen.

4. Fahrzeug nach den Ansprüche 2 und 3, dadurch gekennzeichnet, daß die genannten Sperrmittel eine Hülse (26) umfassen, die zur Rotation mit dem Planetenträger (19) des Zwischen-Differentialgetriebes (18) befestigt ist und bezüglich diesem zwischen einer ersten, äußersten, ausgekuppelten Stellung und einer zweiten, äußersten, eingekuppelten Stellung am Lagerkreuz (10) des Frontdifferentials gleitbar ist.

FIG. 1

FIG. 2

0 043 806

FIG. 3

19a

26

6

9

10  27

FIG. 4

9

28

31  31  32

30

29

33

8

23 17  24  FIG. 5

23a  14

22  22  22

19b

23

23a

23a  23

25

10

22 23

0 043 806